# EUROPÄISCHE PATENTSCHRIFT

(11) **EP 3 270 238 B1**
(45) Veröffentlichungstag und Bekanntmachung des Hinweises auf die Patenterteilung: **20.05.2020**
(21) Anmeldenummer: 16179279.1
(22) Anmeldetag: 13.07.2016
(51) Int. Cl.: G05B 9/02, G05B 19/042, H02P 29/00

(54) **VERFAHREN ZUR STEUERUNG EINES ANTRIEBS**
METHOD FOR CONTROLLING A DRIVE
PROCÉDÉ DE COMMANDE D'UN ENTRAÎNEMENT

(43) Veröffentlichungstag der Anmeldung: 17.01.2018
(73) Patentinhaber: Siemens Aktiengesellschaft, 80333 München (DE)
(72) Erfinder: Czerny, Werner, 91315 Höchstadt (DE); Götz, Reinhold, 91074 Herzogenaurach (DE); Heilmann, Andreas, 91361 Pinzberg (DE); Kabus, Jan, 09127 Chemnitz (DE); Meier, Stefan Ingo, 91052 Erlangen (DE); Meinardus, Martin, 90409 Nürnberg (DE); Merkel, Christian, 91052 Erlangen (DE); Mielke, Jürgen, 96049 Bamberg (DE); Vlaic, Iuliu, 91056 Erlangen (DE)

(56) Entgegenhaltungen:
- EP-A1- 2 927 762
- WO-A1-2015/145562
- DE-A1-102010 051 413
- DE-C1- 19 520 642

## Beschreibung

Die Erfindung betrifft ein Verfahren zur Steuerung eines Antriebs mit zumindest einem Umrichter, zumindest einem Motor und einer zugeordneten Antriebssteuerung. Die Erfindung betrifft weiterhin ein System umfassend zumindest einen Umrichter, zumindest einen Motor, eine zugeordnete Antriebssteuerung.

In Europa gibt es hohe gesetzliche Sicherheitsanforderungen insbesondere für Mehrmotorenantriebssysteme von Papiermaschinen. Gefordert werden Sicherheitsfunktionen wie Anfahrwarnung, Sicherung gegen unerwarteten Anlauf, Not-Halt, Geschwindigkeitsüberwachung für Konstruktions- und Kriechgeschwindigkeit sowie ein sicherheitsgerichteter Tippbetrieb, bei dem eine langsame Antriebsgeschwindigkeit aktiv wird, solange ein Bedientaster betätigt wird.

Die Implementierung aller oben genannten Sicherheitsfunktionen ist unter dem Einsatz von vielen Sicherheits-Hardware-Komponenten (z.B. s.g. E-Stop Relais, Drehzahlwächtern, Sicherheitsrelais) sehr aufwendig. Zudem ist damit ein großer zusätzlicher Projektierungs-, Verkabelungs- und Inbetriebnahme-Aufwand verbunden. Die Diagnose in Störfällen erfordert dabei eine äußerst komplizierte Fehlersuche.

DE 102010051413 A1 beschreibt ein ähnliches Antriebssystem, welches auch eine Sicherheitssteuerung aufweist.

Der Erfindung liegt die Aufgabe zugrunde, eine einfache und zuverlässige Ausführung der sicherheitsrelevanten Funktionen eines Antriebs zu ermöglichen.

Die Aufgabe wird erfindungsgemäß gelöst durch ein Verfahren zur Steuerung eines Antriebs mit zumindest einem Umrichter, zumindest einem Motor und einer zugeordneten Antriebssteuerung, wobei eine Sicherheits-CPU vorgesehen ist, die getrennt von der Antriebssteuerung betrieben wird und lediglich sicherheitsrelevante Informationen bearbeitet, wobei von der Sicherheits-CPU mehrere Sicherheits-Funktionen ausgeführt werden.

Die Aufgabe wird weiterhin erfindungsgemäß gelöst durch ein System umfassend zumindest einen Umrichter, zumindest einen Motor, eine zugeordnete Antriebssteuerung und eine von der Antriebssteuerung getrennte Sicherheits-CPU, die lediglich sicherheitsrelevante Informationen bearbeitet, wobei die Sicherheits-CPU zumindest ein Sicherheitsprogramm zur Durchführung eines solchen Verfahrens aufweist.

Die in Bezug auf das Verfahren nachstehend angeführten Vorteile und bevorzugten Ausgestaltungen lassen sich sinngemäß auf das System übertragen.

Die Erfindung basiert auf der Idee, dass eine besonders einfache Ausführung der sicherheitsrelevanten Funktionen eines Antriebs möglich ist, indem eine Sicherheits-CPU mehrere, insbesondere alle Sicherheitsfunktionen für den Antrieb übernimmt. Im Hinblick auf eine bessere Diagnose-Möglichkeit, einfachere Fehlersuche und eine schnellere Inbetriebnahme sind die Sicherheitsfunktionen des Antriebs in einer einzigen CPU gebündelt. Diese Sicherheits-CPU dient als Ergänzung zum Antrieb mit einer klassischen Antriebssteuerung, die kein Sicherheitsprogramm aufweist. Daher ist insbesondere keine zusätzliche Sicherheits-Hardware notwendig. Die einzelnen Sicherheitsfunktionen sind hierbei in einem Sicherheitsprogramm zusammengefasst, welches von der Sicherheits-CPU ausgeführt wird. Die Sicherheits-CPU ist entkoppelt von der Antriebssteuerung, wodurch eine besonders einfache Nachrüstung bestehender Antriebe mit eigener Antriebssteuerung durch die zusätzliche Sicherheits-CPU möglich ist.

Vorzugsweise wird mittels der Sicherheits-CPU ein Mehrmotorenantrieb gesteuert. Die Ansteuerung von Mehrmotorenantriebsystemen ist in der Regel sehr aufwendig, entsprechend aufwendig ist deren Sicherheitssteuerung, daher bietet sich der Einsatz der Sicherheits-CPU bei Mehrmotorenantriebsystemen an.

Gemäß einer bevorzugten Ausführungsvariante kommunizieren die Antriebssteuerung und die Sicherheits-CPU über jeweils eine Kommunikationsschnittstelle mit dem Umrichter. Hierbei kommuniziert die Antriebssteuerung insbesondere über ein Feldbussystem mit dem Umrichter und die Sicherheits-CPU kommuniziert über ein eigenes Feldbussystem oder über eine separate Datenleitung für Digitalsignale mit dem Umrichter.

Gemäß einer alternativen Ausführungsvariante kommuniziert lediglich die Sicherheits-CPU über eine Kommunikationsschnittstelle mit dem Umrichter. Die Sicherheits-CPU in diesem Fall zwischen der Antriebssteuerung und dem Umrichter geschaltet, so dass lediglich die Sicherheits-CPU eine direkte Kommunikationsschnittstelle zum Umrichter aufweist, die insbesondere als ein Feldbussystem ausgebildet ist. Hierbei dient die Sicherheits-CPU zusätzlich zu allen Sicherheitsfunktionen für den Antrieb auch als "Gateway" zum "Durchreichen" der Befehle zum Antrieb und der Rückmeldungen vom Antrieb zur Antriebssteuerung.

Ein Ausführungsbeispiel der Erfindung wird anhand einer Zeichnung näher erläutert. Hierin zeigen in einer schematischen Darstellung:
FIG 1 eine erste Ausführungsvariante eines Systems mit einer Sicherheits-CPU, und
FIG 2 eine zweite Ausführungsvariante eines Systems mit einer Sicherheits-CPU.

Gleiche Bezugszeichen haben in den Figuren die gleiche Bedeutung.

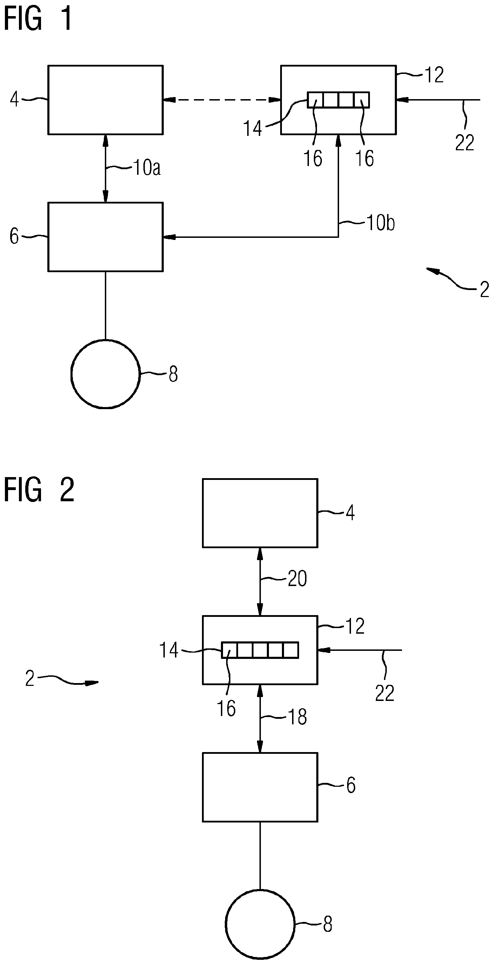

In FIG 1 ist ein System 2 dargestellt, welches Teil eines hier nicht näher gezeigten Antriebs ist. Das System 2 umfasst eine Antriebssteuerung 4, einen Umrichter 6, der hierbei ein Frequenzumrichter ist, und einen Motor 8, wobei der Umrichter 6 und der Motor 8 stellvertretend für mehrere Umrichter und Motoren stehen, wenn es sich beim Antrieb um einen Mehrmotorenantrieb handelt. Die Antriebssteuerung 4 ist über ein Feldbussystem 10a datentechnisch mit dem Frequenzumrichter 6 verbunden, so dass zwischen der Antriebssteuerung 4 und dem Frequenzumrichter 6 z.B. Sollwerte, Istwerte, Befehle und/oder Statusinformationen ausgetauscht werden. Der Frequenzumrichter 6 speist den Motor 8 mit Strom.

Das System 2 umfasst weiterhin eine Sicherheits-CPU 12, welche über ein zweites Feldbussystem 10b oder über eine Datenleitung für Digitalsignale mit dem Frequenzumrichter 6 kommuniziert. Die Sicherheits-CPU 12 bearbeitet sicherheitsrelevante Signale, die von z.B. Not-Halt Tastern, Sicherheitsschaltern, Tippbefehlen, Warngeräte, etc. über eine oder mehrere Leitungen bzw. ein Feldbussystem 22 zugeführt werden. Anstelle der Leitung 22 kann auch eine drahtlose Übertragung z.B. über WLAN stattfinden. Die Sicherheits-CPU 12 weist ein Sicherheitsprogramm 14 auf, welches mehrere, insbesondere alle für den sicheren Betrieb des Antriebssystems erforderlichen Sicherheitsfunktionen 16 enthält. Sicherheitsfunktionen 16 in diesem Sinne sind beispielsweise eine Anfahrwarnung, eine Sicherung gegen unerwarteten Anlauf, Not-Halt, Geschwindigkeitsüberwachung für Konstruktions- und Kriechgeschwindigkeit sowie ein sicherheitsgerichteter Tippbetrieb.

Über das zweite Feldbussystem 10b wird der Frequenzumrichter 6 im Hinblick auf die Sicherheitsfunktionen 16 angesteuert. Über das zweite Feldbussystem 10b können zudem vom Frequenzumrichter 6 in die Sicherheits-CPU 12 Istwerte und/oder Statusinformationen eingespeist werden.

Eine alternative Ausführung des Systems 2 ist aus FIG 2 ersichtlich. Der wesentliche Unterschied zur Ausführungsvariante gemäß FIG 2 besteht darin, dass lediglich die Sicherheits-CPU 12 unmittelbar mit dem Frequenzumrichter 6 über ein Feldbussystem 18 kommuniziert. Die Sicherheits-CPU 12 dient dabei als "Gateway" zum Weiterleiten der Werte und Befehle der Antriebssteuerung 4 zum Frequenzumrichter 6, die sie über eine Datenleitung 20 empfängt. Zusätzlich werden der Sicherheits-CPU 12 über die Leitung 22 die sicherheitsrelevanten Signale zugeführt, diese werden im Sicherheitsprogramm 14 den einzelnen Sicherheitsfunktionen 16 zugeordnet und bearbeitet.

## Patentansprüche

1. Verfahren zur Steuerung eines Antriebs mit zumindest einem Umrichter (6), zumindest einem Motor (8) und einer zugeordneten Antriebssteuerung (4), wobei eine Sicherheits-CPU (12) vorgesehen ist, die getrennt von der Antriebssteuerung (4) betrieben wird und lediglich sicherheitsrelevante Informationen bearbeitet, wobei von der Sicherheits-CPU (12) mehrere Sicherheits-Funktionen (16) ausgeführt werden **dadurch gekennzeichnet, dass** lediglich die Sicherheits-CPU (12) über jeweils eine Kommunikationsschnittstelle (18) mit dem Umrichter (6) kommuniziert.

2. Verfahren nach Anspruch 1,
wobei mittels der Sicherheits-CPU (12) ein Mehrmotorenantrieb gesteuert wird.

3. Verfahren nach Anspruch 1 oder 2, wobei die Sicherheits-CPU für einen Antrieb zum Durchreichen von Befehlen zum Antrieb und zur Rückmeldung vom Antrieb zur Antriebssteuerung dient.

4. System (2) umfassend zumindest einen Umrichter (6), zumindest einen Motor (8), eine zugeordnete Antriebssteuerung (4) und eine von der Antriebssteuerung (4) getrennte Sicherheits-CPU (12), die lediglich sicherheitsrelevante Informationen bearbeitet, wobei die Sicherheits-CPU (12) zumindest ein Sicherheitsprogramm (14) zur Durchführung eines Verfahrens nach einem der vorhergehenden Ansprüche aufweist.

## Claims

1. Method for controlling a drive having at least one converter (6), at least one motor (8) and an associated drive control (4), wherein a failsafe CPU (12) is provided, which is operated separately from the drive control (4) and only processes safety-relevant information, wherein a number of safety functions (16) are implemented by the failsafe CPU (12), **characterised in that** only the failsafe CPU (12) communicates with the converter (6) by way of a communication interface (18) in each case.

2. Method according to claim 1,
wherein a multi-motor drive is controlled by means of the failsafe CPU (12).

3. Method according to claim 1 or 2, wherein the failsafe CPU for a drive is used to hand over commands to the drive and to feed back from the drive to the drive control (4).

4. System (2) comprising at least one converter (6), at least one motor (8), an assigned drive control (4) and a failsafe CPU (12) separated from the drive control (4), which only processes safety-relevant information, wherein the failsafe CPU (12) has at least one safety program (14) for carrying out a method according to one of the preceding claims.

## Revendications

1. Procédé de commande d'un entraînement, comprenant au moins un convertisseur (6), au moins un moteur (8) et une commande (4) d'entraînement associée, dans lequel il est prévu une CPU (12) de sécurité, que l'on fait fonctionner séparément de la commande (4) d'entraînement et qui travaille seulement des informations pertinentes du point de vue de la sécurité, dans lequel plusieurs fonctions (16) de sécurité sont réalisées par la CPU (12) de sécurité, **caractérisé en ce que** seulement la CPU (12) de sécurité communique avec le convertisseur (6) par, respectivement, une interface (18) de communication.

2. Procédé suivant la revendication 1,
dans lequel on commande un entraînement à plusieurs moteurs au moyen de la CPU (12) de sécurité.

3. Procédé suivant la revendication 1 ou 2, dans lequel la CPU de sécurité sert à un entraînement pour passer des instructions à l'entraînement et pour les renvoyer de l'entraînement à la commande d'entraînement.

4. Système (2), comprenant au moins un convertisseur (6), au moins un moteur (8), une commande (4) d'entraînement associée et une CPU (12) de sécurité distincte de la commande (4) d'entraînement, qui traite seulement des informations pertinentes du point de vue de la sécurité, la CPU (12) de sécurité ayant au moins un programme (14) de sécurité pour effectuer un procédé suivant l'une des revendications précédentes.
